# EUROPÄISCHE PATENTSCHRIFT

(11) **EP 1 415 135 B1**
(45) Veröffentlichungstag und Bekanntmachung des Hinweises auf die Patenterteilung: **07.04.2010**
(21) Anmeldenummer: 02774494.5
(22) Anmeldetag: 01.08.2002
(51) Int. Cl.: G01L 19/00

(54) **DRUCKTRANSMITTERINSTALLATION AN EINER PROZESSLEITUNG EINER PROZESSANLAGE**
PRESSURE TRANSMITTER INSTALLATION IN A PROCESS LINE OF A PROCESS FACILITY
INSTALLATION DE TRANSMISSION DE PRESSION DANS UNE LIGNE DE PROCESSUS D'UN SYSTEME DE PROCESSUS

(30) Priorität: 10.08.2001 DE 10139562
(43) Veröffentlichungstag der Anmeldung: 06.05.2004
(73) Patentinhaber: Hess, Martin, 85051 Ingolstadt (DE)
(72) Erfinder: Hess, Martin, 85051 Ingolstadt (DE)
(74) Vertreter: Liebl, Thomas
(86) Internationale Anmeldenummer: PCT/EP2002/008576
(87) Internationale Veröffentlichungsnummer: WO 2003/014691

(56) Entgegenhaltungen:
- DE-C- 19 921 172

## Beschreibung

Die Erfindung betrifft eine Drucktransmitterinstallation an einer Prozessleitung einer Prozessanlage nach dem Oberbegriff des Anspruchs 1.

Eine bekannte gattungsgemäße Drucktransmitterinstallation an einer Prozessleitung einer Prozessanlage (DE 199 21 172 C1) umfasst einen Prozessleitungs-Anschlussflansch mit einer nachgeordneten Druckmessleitung, Absperrelement und einen Drucktransmitter. Als erstes Element in der Druckmessleitung ist dem Prozessleitungs-Anschlussflansch ein Primärabsperrorgan nachgeordnet, welches eingangsseitig mit der Prozessleitung verbunden ist. Das Primärabsperrorgan weist in einem Absperrorgan-Körperblock einen Aufnahmeraum auf, in dem ein bewegbares Absperrelement aufgenommen ist. Dieses ist von einer Durchgangsstellung, in der eine Durchgangsverbindung von der Eingangsseite vor dem Stellelement zu einem Absperrraum nach dem Stellelement hergestellt ist, in eine Absperrstellung, in der die Durchgangsverbindung geschlossen ist, stellbar. Im Verlauf der Druckmessleitung ist weiter eine Druckmesszelle mit einem Druckaufnehmer angeordnet, wobei der Druckaufnehmer an eine Messelektronik angeschlossen ist.

Zur Reduzierung des Installationsaufwands ist diese gattungsgemäße Drucktransmitterinstallation hier direkt an der Prozessleitung angeschlossen und mechanisch gehalten, wobei die kurzen und stabilen Messleitungselemente eine Trägerfunktion für einen Ventilblock und einen Drucktransmitter übernehmen. Mit den Primär-Absperrorganen, die beispielsweise als Kugelhähne oder Kükenhähne ausgeführt sein können, sind jeweils transmitterseitige Ventilblöcke verbunden, an denen wiederum Transmitterkörper mit darin enthaltenen Messzellen und Gehäuse für die Messelektronik angeschlossen sind. Bei einer ebenfalls aus der DE 199 21 172 C1 bekannten gattungsgemäβen Differenzdruck-Transmitterinstallation sind zwei parallele Messleitungen mit jeweils einem zugeordneten Primärabsperrorgan und jeweils einem nachgeordneten transmitterseitigen Ventilblock zu einem Differenzdrucktransmitter angebracht.

Diese bekannte, aufwendige Hintereinanderschaltung jeweils eines Primärabsperrorgans und eines transmitterseitigen Ventilblocks in einer Messleitung ist erforderlich, um für Manipulationen am Transmitter, wie z. B. Wartungen oder einem Transmitteraustausch, sowohl die Druckverhältnisse nach einem abgesperrten Primärabsperrorgan als auch medienbedingte Probleme, wie z. B. bei giftigen Medien, beherrschbar zu machen. Dazu können in an sich bekannter Weise nach einem Absperren der Primärabsperrorgane bei noch anliegendem Prozessdruck transmitterseitige Ventile für einen gezielten Druckabbau und eine gezielte Entfernung des Druckmediums in Toträumen nach den Primärabsperrorganen geöffnet werden. Diese Toträume nach den Primärabsperrorganen können auch Probleme u.a. hinsichtlich einer Temperaturausdehnung oder der Keimfreiheit von darin verbliebenen Medienrückständen ergeben, so dass solche Toträume ggf. aufwendig zu spülen sind und beispielsweise bei Lebensmittelproduktionen zu sterilisieren sind.

Aufgabe der Erfindung ist es eine gattungsgemäße Drucktransmitterinstallation so weiterzubilden, dass die Anordnung kostengünstiger und kompakter wird und die vorstehend genannten Nachteile nicht auftreten oder zumindest weitgehend reduziert sind.

Diese Aufgabe wird mit den Merkmalen des Anspruchs 1 gelöst.

Gemäß Anspruch 1 ist unter Wegfall weiterer Absperrorgane die Druckmesszelle unmittelbar in einem geschlossenen Absperrraum mit minimiertem Totraum unmittelbar nach dem Absperr-Stellelement des Primärabsperrorgans integriert.

Da hier pro Messleitung nur noch ein Primärabsperrorgan mit integrierter Messzelle eingesetzt ist, kann die Drucktransmitterinstallation durch den Wegfall weiterer Absperrorgane sehr kostengünstig und kompakt ausgeführt werden. Zudem ist die Gesamtanordnung gewichtsgünstig, so dass bei einer direkten Montage an einer Prozessleitung von dieser vorteilhaft nur eine relativ geringe Abstützkraft aufzubringen ist. Dies ist auch dann der Fall, wenn die Prozessleitung über einem Prozessleitungs-Anschlussflansch an die Prozessleitung angeschlossen ist.

Durch die unmittelbare Integration der Messzelle im Primärabsperrorgan können Toträume soweit minimiert werden, dass sie für die Funktion der Drucktransmitterinstallation problemlos und weitestgehend vernachlässigbar sind. Dies führt einerseits dazu, dass ein transmitterseitiger Ventilblock entbehrlich ist und andererseits die mit den bisherigen, relativ großen Toträumen verbundenen Probleme und erforderlichen Arbeiten nicht auftreten. Besonders vorteilhaft sind solche minimierte bzw. fehlende Toträume bei giftigen Stoffen und bei Medien die keimfrei zu halten sind. Ansonsten erforderliche Spülungen und Sterilisationen können vorteilhaft entfallen. Ebenso können keine Probleme mit Temperaturausdehnungen in Toträumen auftreten.

Als Primärabsperrorgane können bevorzugt an sich bekannte Kugelhähne oder Kükenhähne eingesetzt werden, die sich für eine Integration von Messzellen gut eignen.

In einer bevorzugten Ausführungsform nach Anspruch 2 ist der Abschluss des Absperrraums als Druckmesszelle mittels eines lösbaren Deckelteils hergestellt. Damit kann ein Druckfühler in der Druckmesszelle einfach eingesetzt und montiert werden und ist auch ggf. für Wartungs- oder Austauschzwecke nach Lösen des Deckelteils leicht zugänglich.

Als Druckaufnehmer kann auch bei der erfindungsgemäßen Anordnung gemäß Anspruch 3 eine übliche Druckmembran verwendet werden die unmittelbar quer nach einer Durchgangsöffnung des Stellelements für eine Minimierung von Toträumen anzuordnen ist. Eine Verformung und/oder Belastung der Druckmembran durch einen anliegenden Prozessdruck wird in ein elektrisches Messsignal umgesetzt und in der angeschlossenen Messelektronik weiterverarbeitet.

Die Messelektronik wird vorteilhaft in einem Elektronikgehäuse angeordnet, das nach Anspruch 4 mit dem Primärabsperrorgan für einen Aufbau als kompakte Einheit mechanisch verbunden ist. Zweckmäßig wird nach Anspruch 5 das Elektronikgehäuse mit einem lösbaren Deckelteil der Messzelle mechanisch verbunden, so dass das Elektronikgehäuse mit der Messelektronik, das Deckelteil und ein angeschlossener oder anschließbarer Druckfühler eine Montageeinheit bilden.

Gemäß Anspruch 6 kann die vorstehend angegebene Drucktransmitterinstallation mit prinzipiell gleichen Merkmalen und Maßnahmen auch als Differenzdruck-Transmitterinstallation ausgelegt werden. Dazu sind zwei Druck-Messleitungen vorgesehen mit jeweils einem zugeordneten Primärabsperrorgan und jeweils einem Absperrstellelement in wenigstens einem Absperrorgan-Körperblock. Unter Wegfall weiterer Absperrorgane ist die Differenzdruckmesszelle mit einem Differenzdruckaufnehmer in einem jeweils einem Stellelement nachgeordneten Absperrraum mit minimiertem Totraum integriert, wobei die beiden Druckmessleitungen je an eine Seite des Differenzdruckaufnehmers herangeführt sind. Damit treten auch bei der hier beanspruchten Differenzdruck-Transmitterinstallation die vorstehend in Verbindung mit einer Drucktransmitterinstallation erläuterten Vorteile auf.

Eine für einen kompakten Aufbau günstige Leitungsführung ergibt sich nach Anspruch 7 dadurch, dass die beiden Druckmessleitungen in wenigstens einem Absperrorgan-Körperblock, ausgehend von einem Anschlussflansch parallel verlaufen und anschließend unter Zwischenschaltung der jeweiligen Absperrstellelemente bogenförmig aufeinander zugeführt sind und jeweils an einer Seite des Differenzdruckaufnehmers an der zentralen Differenzdruckmesszelle enden.

Eine einfache Montage und ggf. spätere gute Zugänglichkeit des Differenzdruckaufnehmers wird nach Anspruch 8 dadurch erreicht, dass der Absperrorgan-Körperblock aus zwei im Bereich der Differenzdruckmesszelle aneinanderliegenden und lösbar verbundenen Körperblockteilen besteht.

Anhand einer Zeichnung wird die Erfindung näher erläutert.

Es zeigen:
- Fig. 1: eine schematische Schnittansicht durch eine erfindungsgemäße Druck- transmitterinstallation an einer Prozessleitung einer Prozessanlage, und
- Fig. 2: einen schematischen Querschnitt durch eine als Differenzdruck-Trans- mitterinstallation ausgelegte Drucktransmitterinstallation an einer Pro- zessleitung einer Prozessanlage.

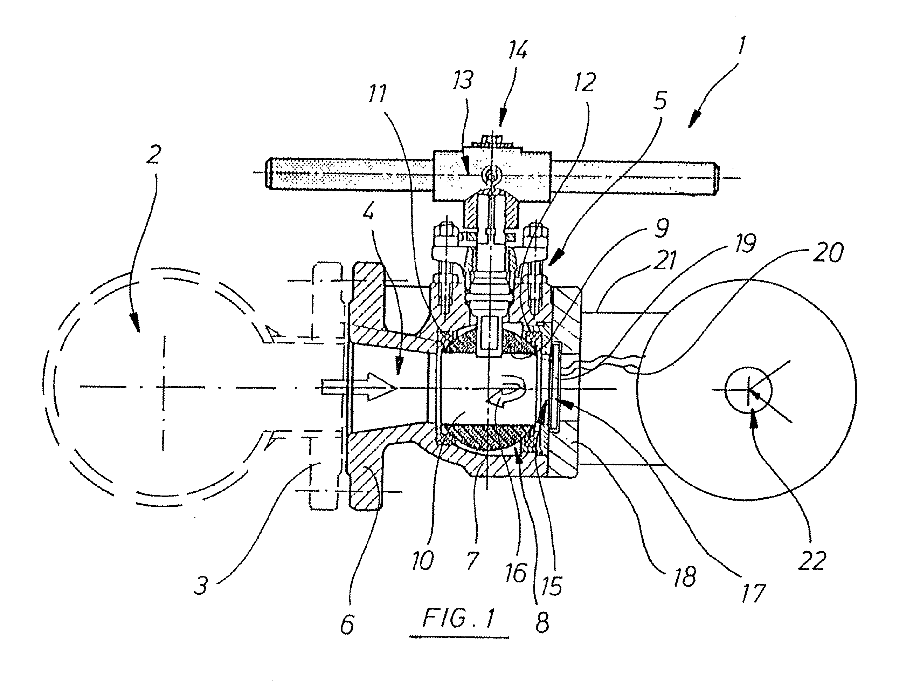

In Fig. 1 ist schematisch ein Querschnitt durch eine Drucktransmitterinstallation 1 an einer hier lediglich schematisch und strichliert eingezeichneten Prozessleitung 2 einer Prozessanlage gezeigt.

Diese Drucktransmitterinstallation umfasst hier beispielhaft einen prozessleitungsseitigen Prozessleitungs-Anschlussflansch 3, dem eine Druckmessleitung 4 nachgeordnet ist. In der Druckmessleitung 4 ist ein Kugelhahn 5 als Primärabsperrorgan angeordnet, das eingangsseitig über einen Kugelhahn-Anschlussflansch 6 mit dem Prozessleitungs-Anschlussflansch 3 verbunden ist. Der Kugelhahn weist in einem Absperrorgan-Körperblock 7 einen Aufnahmeraum 8 auf, in dem ein kugelförmiger Absperrkörper 9 als Absperr-Stellelement mit einer hier zylindrischen Durchströmöffnung 10 aufgenommen ist. Dieser kugelförmige Absperrkörper 9 ist gegenüber dem Absperrorgan-Körperblock 7 mittels Dichtungen 11, 12 abgedichtet.

Wie dies der Fig. 1 zudem weiter entnommen werden kann, umfasst der Kugelhahn 5 ferner einen Stellhebel 13, der so mit dem kugelförmigen Absperrkörper 9 verbunden ist, dass dieser von einer in der Fig. 1 dargestellten Durchgangsstellung 14, in der über die Durchströmöffnung 10 eine Durchgangsverbindung von der Eingangsseite vor dem Absperrkörper 9 zu einem Absperrraum 15 nach dem Absperrkörper 9 hergestellt ist, in eine in der Fig. 1 entsprechend dem Pfeil 16 angedeutete, jedoch nicht gezeigte Absperrstellung verstellbar ist, in der die Durchgangsverbindung entsprechend geschlossen ist.

Der Fig. 1 kann zudem weiter entnommen werden, dass eine in der Druckmessleitung 4 angeordnete Druckmesszelle 17 unmittelbar in einem geschlossenen Absperrraum 15 mit minimiertem Totraum unmittelbar nach dem kugelförmigen Absperrkörper 9 integriert ist.

Der Abschluss des Absperrraums 15 als Druckmesszelle ist mittels eines lösbaren Deckelteils 18 hergestellt, wobei der Druckaufnehmer als Druckmembran 19 ausgebildet ist, die unmittelbar quer nach der Durchströmöffnung 10 des Absperrkörpers 9 angeordnet ist.

Die Druckmembran 19 ist in üblicher Weise über entsprechende Leitungen 20 mit einer in einem Elektronikgehäuse 21 aufgenommenen Messelektronik 22 die hier lediglich äußerst schematisch dargestellt ist, verbunden.

Das Elektronikgehäuse 21 ist ferner mit dem lösbaren Deckelteil 18 der Messzelle mechanisch verbunden, was ebenfalls lediglich äußerst schematisch und beispielhaft dargestellt ist.

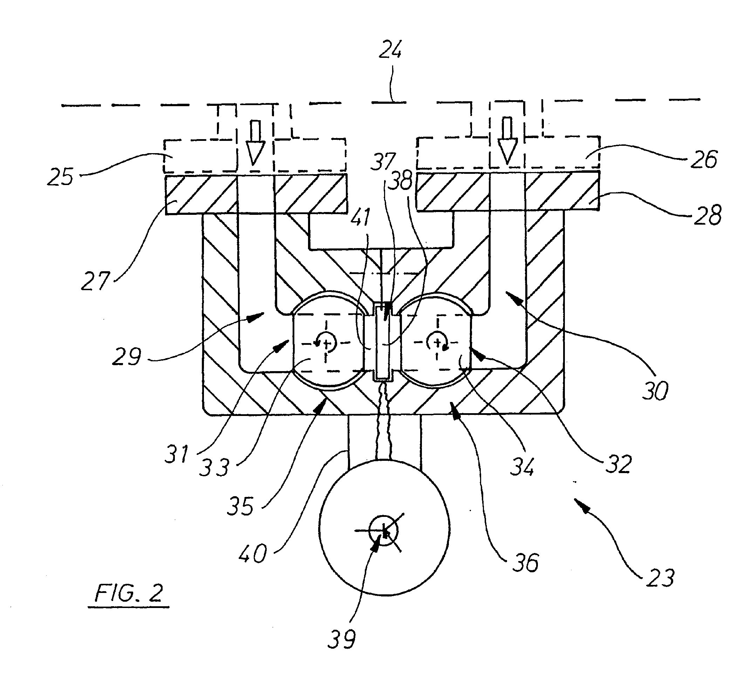

In der Fig. 2 ist eine alternative Ausführungsform gezeigt, bei der eine Drucktransmitterinstallation als Differenzdruck-Transmitterinstallation 23 ausgelegt ist. Eine Prozessleitung 24 ist hier über zwei Prozessleitungs-Anschlussflansche 25, 26, die ebenso wie die Prozessleitung 24 lediglich schematisch und strichliert dargestellt sind, mit jeweils einem Kugelhahn-Anschlussflansch 27, 28 von zwei nachgeordneten Druckmessleitungen 30 verbunden.

Jeder Druckmessleitung 29, 30 ist ein Kugelhahn 31, 32 als Primärabsperrorgan zugeordnet mit jeweils einem kugelförmigen Absperrkörper 33, 34 in einem Absperrorgan-Körperblock 35, 36.

Wie dies der Fig. 2 weiter entnommen werden kann, verlaufen die beiden Druckmessleitungen 29, 30 ausgehend von dem Kugelhahn-Anschlussflansch 27, 28 parallel und sind anschließend unter Zwischenschaltung der kugelförmigen Absperrkörper 33, 34 aufeinander zugeführt, wobei eine Differenzdruckmesszelle 37 mit einer Druckmembran 38 als Differenzdruckaufnehmer in einem jeweils den beiden kugelförmigen Absperrkörpern 33, 34 der Kugelhähne 31, 32 nachgeordneten Absperrraum 41 mit minimiertem Totraum integriert ist. Die beiden Druckmessleitungen 29, 30 enden dabei zu beiden Seiten der Druckmembran 38 an der zentralen Differenzdruck-Messzelle 37.

Die beiden Körperblöcke 35, 36 liegen dabei im Bereich der Differenzdruck-Messzelle 37 aneinander an und sind lösbar miteinander verbunden. Auch hier ist wiederum die Druckmembran 38 mit einer Messelektronik 39 gekoppelt, die in einem mit den Körperblöcken 35, 36 verbindbaren Elektronikgehäuse 40 aufgenommen ist, was in der Darstellung der Fig. 2 ebenfalls lediglich äußerst schematisch dargestellt ist.

## Patentansprüche

1. Drucktransmitterinstallation geeignet zur Montage an einer Prozessleitung (2) einer Prozessanlage ausgeführt
mit einem Prozessleitungs-Anschlussflansch (3) und einer nachgeordneten Druckmessleitung (4),
mit einem als erstem Element in der Druckmessleitung (4) nachgeordneten Primärabsperrorgan (5, 31, 32), welches eingangsseitig mit der Prozessleitung (2) verbunden ist, wobei
das Primärabsperrorgan (5, 31, 32) in einem Absperrorgan-Körperblock (7) einen Aufnahmeraum (8) aufweist, in dem ein bewegbares Absperr-Stellelement (9, 33, 34) aufgenommen ist, welches von einer Durchgangsstellung, in der eine Durchgangsverbindung von der Eingangsseite vor dem Stellelement zu einem Absperrraum (15, 41) nach dem Stellelement hergestellt ist, in eine Absperrstellung, in der die Durchgangsverbindung geschlossen ist, stellbar ist, und
mit einer im Verlauf der Druckmessleitung nachgeordneten Druckmesszelle (17, 37) mit einem Druckaufnehmer (19) und mit einer daran angeschlossenen Messelektronik (22, 39),
**dadurch gekennzeichnet,**
**dass** unter Wegfall weiterer Absperrorgane die Druckmesszelle (17; 37) unmittelbar in einem geschlossenen Absperrraum (15; 41) mit minimiertem Totraum unmittelbar nach dem Absperr-Stellelement (9; 33, 34) des Primärabsperrorgans (5; 31, 32) integriert ist.

2. Drucktransmitterinstallation nach Anspruch 1, **dadurch gekennzeichnet, dass** der Abschluss des Absperrraums (15) als Druckmesszelle (17) mittels eines lösbaren Deckelteils (18) hergestellt ist.

3. Drucktransmitterinstallation nach Anspruch 1 oder Anspruch 2, **dadurch gekennzeichnet, dass** der Druckaufnehmer als Druckmembran (19; 38) ausgebildet ist, die unmittelbar quer nach einer Durchgangsöffnung (10) des Stellelements (9; 33, 34) angeordnet ist.

4. Drucktransmitterinstallation nach einem der Ansprüche 1 bis 3, **dadurch gekennzeichnet, dass** die Messelektronik (22; 39) in einem Elektronikgehäuse (21; 40) aufgenommen ist, das mit dem Primär-Absperrorgan (5; 31, 32) mechanisch verbunden ist.

5. Drucktransmitterinstallation nach Anspruch 4, **dadurch gekennzeichnet, dass** das Elektronikgehäuse (21) mit einem lösbaren Deckelteil (18) der Messzelle (17) mechanisch verbunden ist.

6. Drucktransmitterinstallation nach einem der Ansprüche 1 bis 5, **dadurch gekennzeichnet,**
**dass** die Drucktransmitterinstallation als Differenzdruck-Transmitterinstallation (23) ausgelegt ist,
mit zwei Druck-Messleitungen (29, 30) mit jeweils einem zugeordneten Primärabsperrorgan (31, 32) mit jeweils einem Absperrstellelement (33, 34) in wenigstens einem Absperrorgan-Körperblock (35, 36), und
**dass** unter Wegfall weiterer Absperrorgane die Differenzdruck-Messzelle (37) mit einem Differenzdruckaufnehmer (38) in einem jeweils einem Stellelement (33, 34) nachgeordneten Absperrraum (41) mit minimiertem Totraum integriert ist, wobei die beiden Druckmessleitungen (29, 30) je an eine Seite des Differenzdruckaufnehmers (38) herangeführt sind.

7. Drucktransmitterinstallation nach Anspruch 6, **dadurch gekennzeichnet, dass** die beiden Druckmessleitungen (29, 30) im wenigstens einen Absperrorgan-Körperblock (35, 36) ausgehend von seinem Anschlussflansch (27, 28) parallel verlaufen und anschließend unter Zwischenschaltung der jeweiligen Absperrstellelemente (33, 34) aufeinander zugeführt sind und zu beiden Seiten des Differenzdruckaufnehmers (38) an der zentralen Differenzdruck-Messzelle (37) enden.

8. Drucktransmitterinstallation nach Anspruch 6 oder Anspruch 7, **dadurch gekennzeichnet, dass** der Absperrorgan-Körperblock (35, 36) aus zwei im Bereich der Differenzdruck-Messzelle (37) aneinanderliegenden und lösbar verbundenen Körperblockteilen besteht.

## Claims

1. Pressure transmitter installation designed to be suitable for mounting on a process line (2) of a process plant,
with a process-line connecting flange (3) and with a following pressure-measuring line (4),
with a primary shut-off member (5, 31, 32) which follows as a first element in the pressure-measuring line (4) and which is connected on the inlet side to the process line (2),
the primary shut-off member (5, 31, 32) having, in a shut-off member body block (7), a reception space (8) which receives a movable shut-off actuating element (9, 33, 34) which can be set from a passage position, in which a passage connection is made from the inlet side upstream of the actuating element to a shut-off space (15, 41) downstream of the actuating element, into a shut-off position, in which the passage connection is closed, and
with a pressure-measuring cell (17, 37) following along the run of the pressure-measuring line and having a pressure transducer (19) and having measuring electronics (22, 39) connected thereto,
**characterized in that**,
with further shut-off members being dispensed with, the pressure-measuring cell (17; 37) is integrated directly in a closed shut-off space (15; 41) with a minimized dead space, directly downstream of the shut-off actuating element (9; 33, 34) of the primary shut-off member (5; 31, 32).

2. Pressure transmitter installation according to Claim 1, **characterized in that** the closing-off of the shut-off space (15) as a pressure-measuring cell (17) is effected by means of a releasable cover part (18).

3. Pressure transmitter installation according to Claim 1 or Claim 2, **characterized in that** the pressure transducer is designed as a pressure diaphragm (19; 38) which is directly arranged transversely downstream of a passage orifice (10) of the actuating element (9; 33, 34).

4. Pressure transmitter installation according to one of Claims 1 to 3, **characterized in that** the measuring electronics (22; 39) are received in an electronics housing (21; 40) which is connected mechanically to the primary shut-off member (5; 31, 32).

5. Pressure transmitter installation according to Claim 4, **characterized in that** the electronics housing (21) is connected mechanically to a releasable cover part (18) of the measuring cell (17).

6. Pressure transmitter installation according to one of Claims 1 to 5, **characterized in that**
the pressure transmitter installation is designed as a differential-pressure transmitter installation (23),
with two pressure-measuring lines (29, 30) having in each case an assigned primary shut-off member (31, 32) having in each case a shut-off actuating element (33, 34) in at least one shut-off member body block (35, 36), and **in that**, with further shut-off members being dispensed with, the differential-pressure measuring cell (37) having a differential-pressure transducer (38) is integrated in a shut-off space (41) in each case following an actuating element (33, 34) and having a minimized dead space, the two pressure-measuring lines (29, 30) being led in each case up to one side of the differential-pressure transducer (38).

7. Pressure transmitter installation according to Claim 6, **characterized in that** the two pressure-measuring lines (29, 30) run in parallel in at least one shut-off member body block (35, 36) from the connecting flange (27, 28) of the latter and subsequently are led towards one another, with the respective shut-off actuating elements (33, 34) interposed, and terminate, on both sides of the differential-pressure transducer (38), at the central differential-pressure measuring cell (37).

8. Pressure transmitter installation according to Claim 6 or Claim 7, **characterized in that** the shut-off member body block (35, 36) consists of two body-block parts bearing one against the other in the region of the differential-pressure measuring cell (37) and connected releasably.

## Revendications

1. Installation de transmission de pression réalisée de manière appropriée au montage sur une ligne de processus (2) d'un système de processus,
avec une bride de raccordement de ligne de processus (3) et une conduite de mesure de pression (4) disposée en aval,
avec un organe d'obturation primaire (5, 31, 32) disposé en aval comme premier élément dans la conduite de mesure de pression (4), qui est relié côté entrée à la ligne de processus (2),
l'organe d'obturation primaire (5, 31, 32) présentant dans un bloc de corps d'organe d'obturation (7) un espace de réception (8), dans lequel un élément de réglage d'obturation (9, 33, 34) mobile est reçu, lequel peut être réglé d'une position de passage, dans laquelle est établie une liaison de passage du côté de l'entrée avant l'élément de réglage à un espace d'obturation (15, 41) après l'élément de réglage, à une position d'obturation, dans laquelle la liaison de passage est fermée, et
avec une cellule de mesure de pression (17, 37) disposée en aval dans le tracé de la conduite de mesure de pression avec un capteur de pression (19) et avec un dispositif électronique de mesure (22, 39) raccordé à celui-ci,
**caractérisée en ce**
**qu'**en supprimant d'autres organes d'obturation, la cellule de mesure de pression (17, 37) est directement intégrée dans un espace d'obturation (15 ; 41) fermé avec un espace mort minimisé directement après l'élément de réglage d'obturation (9 ; 33, 34) de l'organe d'obturation primaire (5 ; 31, 32).

2. Installation de transmission de pression selon la revendication 1, **caractérisée en ce que** la terminaison de l'espace d'obturation (15) est fabriquée comme une cellule de mesure de pression (17) au moyen d'une partie de couvercle (18) amovible.

3. Installation de transmission de pression selon la revendication 1 ou 2, **caractérisée en ce que** le capteur de pression est réalisé comme une membrane de pressurisation (19 ; 38) qui est directement disposée transversalement après une ouverture de passage (10) de l'élément de réglage (9 ; 33, 34).

4. Installation de transmission de pression selon l'une quelconque des revendications 1 à 3, **caractérisée en ce que** le dispositif électronique de mesure (22 ; 39) est placé dans un boîtier électronique (21 ; 40) qui est relié mécaniquement à l'organe d'obturation primaire (5 ; 31, 32).

5. Installation de transmission de pression selon la revendication 4, **caractérisée en ce que** le boîtier électronique (21) est relié mécaniquement à une partie de couvercle (18) amovible de la cellule de mesure (17).

6. Installation de transmission de pression selon l'une quelconque des revendications 1 à 5, **caractérisée en ce que** l'installation de transmission de pression est configurée comme une installation de transmission de pression différentielle (23),
avec deux conduites de mesure de pression (29, 30) avec respectivement un organe d'obturation primaire (31, 32) associé avec respectivement un élément de réglage d'obturation (33, 34) dans au moins un bloc de corps d'organe d'obturation 35, 36), et
**en ce qu'**en supprimant d'autres organes d'obturation, la cellule de mesure de pression différentielle (37) avec un capteur de pression différentielle (38) est intégrée dans un espace d'obturation (41) disposé en aval respectivement d'un élément de réglage (33, 34) avec un espace mort minimisé, les deux conduites de mesure de pression (29, 30) étant amenées près d'un côté du capteur de pression différentielle (38).

7. Installation de transmission de pression selon la revendication 6, **caractérisée en ce que** les deux conduites de mesure de pression (29, 30) s'étendent parallèlement dans au moins un bloc de corps d'organe d'obturation (35, 36) en partant de sa bride de raccordement (27, 28) et sont ensuite amenées l'une vers l'autre en intercalant les éléments de réglage d'obturation (33, 34) respectifs et se terminent des deux côtés du capteur de pression différentielle (38) sur la cellule de mesure de pression différentielle centrale (37).

8. Installation de transmission de pression selon la revendication 6 ou 7, **caractérisée en ce que** le bloc de corps d'organe d'obturation (35, 36) se composent de deux parties de bloc de corps reliées de manière amovible et reposant l'une sur l'autre dans la zone de la cellule de mesure de pression différentielle (37).
